Europäisches Patentamt

European Patent Office

Office européen des brevets

(11) Publication number : **0 418 067 B1**

# EUROPEAN PATENT SPECIFICATION

(45) Date of publication of patent specification : **25.01.95 Bulletin 95/04**

(51) Int. Cl.[6] : **H01B 1/12**

(21) Application number : **90309999.2**

(22) Date of filing : **12.09.90**

(54) Method for improving electric conductivity of a resin moulding.

(30) Priority : **13.09.89 JP 238269/89**

(43) Date of publication of application :
**20.03.91 Bulletin 91/12**

(45) Publication of the grant of the patent :
**25.01.95 Bulletin 95/04**

(84) Designated Contracting States :
**DE FR GB IT NL**

(56) References cited :
**EP-A- 0 418 066**
**FR-A- 2 568 574**
**US-A- 4 654 279**

(73) Proprietor : **DAI-ICHI KOGYO SEIYAKU CO.,
LTD.**
**55 Higashi-Kubocho**
**Nishi-Hichijyo**
**Shimogyo-ku Kyoto (JP)**

Proprietor : **KANTO JIDOSHA KOGYO
KABUSHIKI KAISHA**
**Mubanchi,**
**Tauraminatomachi**
**Yokosuka-shi, Kanagawa (JP)**

(72) Inventor : **Fujiwara, Hidekazu, No. 1006
Hi-Terrace**
**Kanazawa Bunko,**
**65-1, Yatsumachi,**
**Kanazawa-ku**
**Yokohama-shi, Kanagawa (JP)**
Inventor : **Mori, Shigeo**
**35-1, Katsura Chiyoharacho**
**Nishikyo-ku, Kyoto (JP)**
Inventor : **Motogami, Kenji**
**A-25-106, Noborimachi 2-ban**
**Takatsuki-shi, Osaka (JP)**

(74) Representative : **Seaborn, George Stephen et
al**
**c/o Edward Evans & Co.**
**Chancery House**
**53-64 Chancery Lane**
**London WC2A 1SD (GB)**

## Description

Background of the Invention

This invention relates to a method of producing a resin moulding having improved electric conductivity.

Conventional methods for improving electric conductivity of a resin moulding comprise mixing conductive substance, specifically carbon black, carbon fibre or conductive mica with the resin.

However, in the conventional methods for improving electric conductivity, it is necessary, in order to substantially increase the electric conductivity, to mix a large amount of the conductive substance with the resin. The conductive substance tends to affect adversely the physical properties of the resultant resin moulding and further the resin is discoloured so that the resin produced may, for example, be black. Accordingly, there are difficulties which are encountered in practical use of the conventional methods.

An object of the present invention is to provide a method of producing a resin moulding having improved electric conductivity and wherein the above-described problems or difficulties are overcome or mitigated, that is the physical properties of the resin moulding are not adversely affected and the moulding is not discoloured.

Summary of the Invention

In accordance with the present invention there is provided a method of producing a resin moulding, which comprises mixing with a resin a complex between a polyether and an electrolyte salt soluble in said polyether, moulding the mixture, and then treating the resultant moulding with plasma,

said polyether having a molecular weight of 1,000 to 100,000 and being selected from polymers of an alkylene oxide having no fewer than 4 carbon atoms per molecule and block or random alkylene oxide copolymers containing not less than 10 weight % of alkylene oxide units having no fewer than 4 carbon atoms, and

said electrolyte salt being selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate, organic sulfonates and organic phosphates.

Detailed Description of the Invention

The resin used in the method according to the invention may be any resin having a high surface resistance, such as a polyolefin resin, e.g., a resin selected from polyethylene and polypropylene, ABS resin, acrylic resin, polyamide resin, polyvinyl chloride resin, polycarbonate resin, polyacetal resin and phenolic resins.

Further, the polyether of the complex used in the method according to the invention may be any polyether selected from alkylene oxide polymers and copolymers as referred to above. Polymers of an alkylene oxide having no fewer than 4 carbon atoms per molecule and block or random alkylene oxide copolymers containing not less than 10 weight % of alkylene oxide units having no fewer than 4 carbon atoms are used.

In general, it is preferred that the polyether is prepared by carrying out a polymerization reaction using one of the following active hydrogen compounds as the starting material; monoalcohols, e.g. methanol and ethanol; dialcohols, e.g. ethylene glycol, propylene glycol and 1,4-butanediol; polyhydric alcohols, e.g. glycerol, trimethylol propane, sorbitol, sucrose and polyglycerol; amine compounds, e.g. monoethanolamine, ethylenediamine, diethylenetriamine, 2-ethylhexylamine and hexamethylene diamine; and phenolic active hydrogen-containing compounds, e.g. bisphenol-A and hydroquinone. It is especially preferred to use alcohols as the starting material.

The alkylene oxides having fewer than 4 carbon atoms per molecule are preferably selected from $\alpha$-olefine oxides having 4 to 9 carbon atoms, e.g., 1,2-epoxybutane, 1,2-epoxypentane, 1,2-epoxyhexane, 1,2-epoxyheptane, 1,2-epoxyoctane, 1,2-epoxynonane and the like; $\alpha$-olefine oxides having no fewer than 10 carbon atoms; and styrene oxide and the like. It is especially preferred to use an $\alpha$-olefine oxides having 4 to 20 carbon atoms.

The polyethers may be either homopolymers or block or random copolymers. The sequence of the above alkylene oxides in the polyethers is not particularly limited. However, preferably the block or random copolymers are of at least one alkylene oxide having no fewer than 4 carbon atoms per molecule and ethylene oxide and/or propylene oxide. Further, block or random copolymers of at least one alkylene oxide having no fewer than 6 carbon atoms per molecule and ethylene oxide and/or propylene oxide are most preferable. It is necessary that the block or random copolymers contain not less than 10 weight %, more preferably not less than 50 weight %, of alkylene oxide units having no fewer than 4 carbon atoms. As mentioned above the alkylene oxide units may be all of the same formula. The end of the polymer may be terminated with an alkyl group such as a methyl group or an ethyl group.

2

The molecular weight of the polyether is 1,000 to 100,000.

The soluble electrolyte salt used to produce a complex with the polyether is selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate, organic sulfonates and organic phosphates. The added amount of the electrolyte salt is preferably 0.5 to 10 weight % based on the polyether.

The used amount of the complex of the polyether and the soluble electrolyte salt is preferably 1 to 10 weight %, more preferably 1 to 5 weight % based on the resin. Though an addition of not less than 10 weight % of it improves electric conductivity, it causes disadvantage deterioration of physical properties and surface bleeding due to the poor compatibility of the salt with the resin.

For forming a complex between the polyether and the soluble electrolyte salt, a method is preferred in which firstly the soluble electrolyte salt is dissolved in a single or mixed solvent highly compatible with the polyether, such as water, methanol, methyl ethyl ketne, tetrahydrofuran, acetone or methylene chloride, and secondly the solution is mixed uniformly with the polyether to give a solution of the complex and thirdly the solvent is removed to give the complex.

For mixing the complex between the polyether and the soluble electrolyte salt with the resin, any commonly used method can be used, such as biaxial extrusion or hot rolling. For moulding the mixture, any commonly used method can be used, such as injection moulding, extrusion moulding, calendering, compression moulding and SMC process.

The plasma treatment is preferably carried out using a low pressure oxidative gas such as oxygen or gaseous mixture of nitrogen or argon with oxygen excited with high frequency discharge or microwave discharge to form active gas which is contacted with the surface of the moulding to be treated. Preferably the pressure is 0.1 to 5 Torr, more preferably 0.2 to 1.0 Torr, the temperature is 40 to 100°C and the treating period is 10 seconds to 10 minutes.

It is preferred that the treating gas contains 18 to 90 volume % of oxygen.

In the resin moulding of the present invention, the cation of the soluble electrolyte salt of the complex can move through the ether oxygen in the polyether and hence ionic conductivity is formed in the resin to lower its resistance.

The cation of the soluble electrolyte salt of the complex and the surface-improvement due to the plasma treatment exert a synergistic effect whereby the resin moulding has a greatly improved electric conductivity and is of very good quality.

Preferred Embodiments of the Invention

The following examples serve to illustrate the invention in more detail although the invention is not limited to the examples.

The surface resistivity in examples was measured as follows: A voltage of 500 V was applied to the test piece with use of an ultra-insulation resistance tester (4329A type manufactured by Yokogawa Hewlett-Packard Company), and then the surface resistivity was measured after 30 seconds.

Example 1

45 g of 1,4-butanediol as a starting material was put in a reactor and 550 g of 1,2-epoxybutane was gradually introduced in it and polymerized by a usual method in the presence of potassium hydroxide as a catalyst. Then the product was purified by desalting to obtain 550 g of a polyether having a molecular weight of 1,100 (calculated from hydroxyl number) and containing 0.23 ppm of $K^+$.

A solution of 25 g lithium perchlorate in 100 g methanol was added to 500 g of the polyether with stirring to obtain a homogeneous solution and then methanol was removed in vacuo to obtain a complex.

30 g of the complex and 1 kg of polypropylene resin were mixed in a biaxial extruder at 180°C for 10 min. and moulded with a hot press method at the same temperature under a pressure of 50 kg/cm$^2$ for 2 min. and surface of the resultant moulding (230 mm × 230 mm × 3 mm) was treated with plasma in a gas containing 89 volume % of oxygen and 11 volume % of nitrogen at a gas flow rate of 6.75 $\ell$/min under a pressure of 0.2 mm Hg at a temperature of 40°C and at an outlet power of 1,200 W for 1 min. to prepare a test piece.

Example 2

32 g of ethylene glycol gas used as a starting material and 667 g of an ethylene oxide/propylene oxide mixture (molar ratio 4:1 ) was reacted with it in the presence of potassium hydroxide as a catalyst. Then a mixture of 496 g of α-olefine oxide having 12 carbon atoms and 1,334 g of propylene oxide was further reacted with the product and thus obtained product was purified by desalting to obtain 5,140 g of a polyether having a molecular weight of 4,970 (calculated from hydroxyl number) and containing 0.16 ppm of $K^+$.

A solution of 25 g of lithium perchlorate in 100 g of methanol was added to 500 g of the polyether with stirring to obtain a homogeneous solution and then methanol in the solution was removed in vacuo to obtain a complex.

70 g of the complex and 1 kg of polypropylene resin were mixed in a biaxial extruder at 180°C for 10 min. and moulded with a hot press method at the same temperature under a pressure of 50 kg/cm$^2$ for 2 min. (230 mm × 230 mm × 3 mm) and surface of the resultant molding was treated with plasma in a gas containing 89 volume % of oxygen and 11 volume % of nitrogen at a gas flow rate of 6.75 $\ell$/min under a pressure of 0.2 mm Hg at a temperature of 40°C and at an outlet power of 1,200 W for 1 min. to prepare a test piece.

Example 3

32 g of ethylene glycol was put in a reactor as a starting material and 1680 g of 1,2-epoxybutane was gradually introduced in it by a usual method in the presence of potassium hydroxide as a catalyst. The reaction product was purified by desalting to obtain 1,690 g of a polyether having a molecular weight of 3,100 (calculated from hydroxyl number) and containing 0.17 ppm of $K^+$.

A solution of 25 g of potassium thiocyanate in 200 g of acetone was added to 500 g of the polyether with stirring to prepare a homogeneous solution and then acetone was removed in vacuo to obtain a complex.

50 g of the complex and 1 kg of polypropylene resin were mixed in a biaxial extruder at 180°C for 10 min. and moulded with a hot press method at the same temperature under a pressure of 50 kg/cm$^2$ for 2 min. (230 mm × 230 mm × 3 mm) and surface of the resultant molding was treated with plasma in a gas containing 89 volume % of oxygen and 11 volume % of nitrogen at a gas flow rate of 6.75 $\ell$/min under a pressure of 0.2 mm Hg at a temperature of 40°C and at an outlet power of 1,200 W for 1 min. to prepare a test piece.

Example 4

45 g of sorbitol was put in a reactor as a starting material and 2,500 g of ethylene oxide and 5,500 g of α-olefine oxide having 6 carbon atoms were successively introduced in it by a usual method in the presence of potassium hyroxide as a catalyst. The reaction product was purified by desalting to obtain 7,400 g of a polyether having a molecular weight of 29,700 (calculated from hydroxyl number) and containing 0.35 ppm of $K^+$.

A solution of 25 g of potassium perchlorate in 100 g of methanol gas added to 500 g of the polyether with stirring to obtain a homogeneous solution and then methanol was removed in vacuo to obtain a complex.

50 g of the complex and 1 kg of polypropylene resin were mixed in a biaxial extruder at 180°C for 10 min. and the product was moulded with a hot press method at the same temperature under a pressure of 50 kg/cm$^2$ for 2 min. (230 mm × 230 mm × 3 mm) and surface of the resultant moulding was treated with plasma in a gas containing 89 volume % of oxygen and 11 volume % of nitrogen at a gas flow rate of 6.75 $\ell$/min under a pressure of 0.2 mm Hg at a temperature of 40°C and at an outlet power of 1200 W for 1 min. to prepare a test piece.

Comparative Example 1

1 kg of polypropylene resin was kneaded in a biaxial extruder at at 180°C for 10 min. and the product was moulded with a hot press method at the same temperature under a pressure of 50 kg/cm$^2$ for 2 min. (230 mm × 230 mm × 3 mm) and surface of the resultant molding was treated with plasma in a gas containing 89 volume % of oxygen and 11 volume % of nitrogen at a gas flow rate of 6.75 $\ell$/min under a pressure of 0.2 mm Hg at a temperature of 40°C and at an outlet power of 1200 W is for 1 min. to prepare a test piece.

The surface resistivity of the test pieces obtained in Examples 1 to 4 and Comprative Example 1 were as follows.

| | Surface Resistivity ($\Omega$) |
|---|---|
| Example 1 | $5.9 \times 10^{12}$ |
| Example 2 | $5.7 \times 10^{12}$ |
| Example 3 | $4.5 \times 10^{12}$ |
| Example 4 | $6.7 \times 10^{12}$ |
| Comparative Example 1 | more than $2 \times 10^{16}$ |

No substantial difference was observed in the other physical properties and appearance between the products prepared in Examples 1 to 4 and Comparative Example 1.

As described above, there can be obtained, according to this invention, a resin moulding having very improved electric conductivity without substantially affecting the colour and physical properties of the resin.

## Claims

1. A method of producing a resin moulding, which comprises mixing with a resin a complex between a polyether and an electrolyte salt soluble in said polyether, moulding the mixture, and then treating the resultant moulding with plasma,

   said polyether having a molecular weight of 1,000 to 100,000 and being selected from polymers of an alkylene oxide having no fewer than 4 carbon atoms per molecule and block or random alkylene oxide copolymers containing not less than 10 weight % of alkylene oxide units having no fewer than 4 carbon atoms, and

   said electrolyte salt being selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate, organic sulfonates and organic phosphates.

2. A method as defined in Claim 1, wherein said electrolyte salt is used in an amount of 0.5 to 10 weight % based on said polyether.

3. A method as defined in Claim 1 or 2, wherein said complex is used in an amount of 1 to 10 weight % based on said resin.

## Patentansprüche

1. Verfahren zur Herstellung eines Harzformteils, welches folgendes umfaßt: Mischen eines Komplexes zwischen einem Polyether und einem in genanntem Polyether löslichen Elektrolytsalz mit einem Harz, Formen des Gemischs und dann Behandeln des sich ergebenden Formteils mit Plasma,

   wobei genannter Polyether ein Molekulargewicht von 1000 bis 100 000 besitzt und aus Polymeren eines Alkylenoxids mit nicht weniger als 4 Kohlenstoffatomen pro Molekül und Block- oder statistisch aufgebauten Alkylenoxid-Copolymeren ausgewählt wird, die nicht weniger als 10 Gew.-% Alkylenoxideinheiten mit nicht weniger als 4 Kohlenstoffatomen enthalten, und

   genanntes Elektrolytsalz aus Lithiumchlorid, Lithiumbromid, Lithiumiodid, Lithiumnitrat, Lithiumperchlorat, Lithiumthiocyanat, Natriumbromid, Natriumiodid, Kaliumthiocyanat, Kaliumiodid, Lithiumsulfonat, organischen Sulfonaten und organischen Phosphaten ausgewählt wird.

2. Verfahren nach Anspruch 1, worin genanntes Elektrolytsalz in einer Menge von 0,5 bis 10 Gew.-% bezogen auf genannten Polyether verwendet wird.

3. Verfahren nach Anspruch 1 oder 2, worin genannter Komplex in einer Menge von 1 bis 10 Gew.-% bezogen auf genanntes Harz verwendet wird.

**Revendications**

1.  Procédé de production d'un article moulé résineux, qui comprend le fait de mélanger avec une résine un complexe entre un polyéther et un sel électrolytique soluble dans ledit polyéther, de mouler le mélange et ensuite de traiter au plasma l'article moulé résultant,

    ledit polyéther possédant un poids moléculaire de 1.000 à 100.000 et étant choisi parmi des polymères d'un oxyde d'alkylène ne possédant pas moins de 4 atomes de carbone par molécule et des copolymères séquencés ou statistiques d'oxydes d'alkylènes ne contenant pas moins de 10% en poids de motifs d'oxydes d'alkylènes ne possédant pas moins de 4 atomes de carbone, et

    ledit sel électrolytique étant choisi parmi le chlorure de lithium, le bromure de lithium, l'iodure de lithium, le nitrate de lithium, le perchlorate de lithium, le thiocyanate de lithium, le bromure de sodium, l'iodure de sodium, le thiocyanate de potassium, l'iodure de potassium, le sulfonate de lithium, des sulfonates organiques et des phosphates organiques.

2.  Procédé tel que défini à la revendication 1, dans lequel on utilise ledit sel électrolytique en une quantité de 0,5 à 10% en poids, basée sur ledit polyéther.

3.  Procédé tel que défini à la revendication 1 ou 2, dans lequel on utilise ledit complexe en une quantité de 1 à 10% en poids, basée sur ladite résine.